# EUROPEAN PATENT APPLICATION

(11) **EP 4 645 131 A1**
(43) Date of publication of application: **05.11.2025**
(21) Application number: 22970076.0
(22) Date of filing: 27.12.2022
(51) Int. Cl.: G06F 21/36, G06F 21/32

(54) **DETERMINATION DEVICE, DETERMINATION METHOD, AND RECORDING MEDIUM**

(71) Applicant: NEC Corporation, 108-8001 Tokyo (JP)
(72) Inventor: SAISHO, Osamu, Tokyo 108-8001 (JP)
(74) Representative: Betten & Resch
(86) International application number: PCT/JP2022/048292
(87) International publication number: WO 2024/142284

(57) **Abstract**

A determination apparatus includes: a first acquisition unit that acquires a first captured image captured by a first image capture unit including a first display unit, the first captured image including second identification information displayed on a second display unit and a face of a target person; a second acquisition unit that acquires a second captured image captured by a second image capture unit including the second display unit, the second captured image including first identification information displayed on the first display unit; a determination unit that performs identity verification of the target person, based on the first captured image and the second captured image; and an output unit that outputs a result of the identity verification. According to such a determination apparatus, it is possible to perform appropriate identity verification while reducing a burden on the target person and a cost.

## Description

### Technical Field

The present disclosure relates to technical fields of a determination apparatus, a determination method, and a recording medium.

### Background Art

There is known an apparatus that performs identity verification by using an image captured by a camera. For example, Patent Literature 1 discloses that the identity verification of an examinee is performed by using image data transmitted from a web camera in an online examination system. Patent Literature 2 discloses that impersonation determination is performed by using a face image captured by a web camera on a PC for a teleworker. Patent Literature 3 discloses that it is determined whether or not users are the same by comparing image data captured in a first image capture operation with image data captured in a second image capture operation.

### Citation List

### Patent Literature

Patent Literature 1: JP2022-031184A
Patent Literature 2: JP2016-118977A
Patent Literature 3: JP2014-119943A

### Summary

### Technical Problem

The present disclosure aims to improve the techniques/technologies disclosed in Citation List.

### Solution to Problem

A determination apparatus according to an example aspect of the present disclosure includes: a first acquisition unit that acquires a first captured image captured by a first image capture unit including a first display unit, the first captured image including second identification information displayed on a second display unit and a face of a target person; a second acquisition unit that acquires a second captured image captured by a second image capture unit including the second display unit, the second captured image including first identification information displayed on the first display unit; a determination unit that performs identity verification of the target person, based on the first captured image and the second captured image; and an output unit that outputs a result of the identity verification.

A determination method according to an example aspect of the present disclosure is a determination method that is executed by at least one computer, the determination method including: acquiring a first captured image captured by a first image capture unit including a first display unit, the first captured image including second identification information displayed on a second display unit and a face of a target person; acquiring a second captured image captured by a second image capture unit including the second display unit, the second captured image including first identification information displayed on the first display unit; performing identity verification of the target person, based on the first captured image and the second captured image; and outputting a result of the identity verification.

A recording medium according to an example aspect of the present disclosure is a recording medium on which a computer program that allows at least one computer to execute a determination method is recorded, the determination method including: acquiring a first captured image captured by a first image capture unit including a first display unit, the first captured image including second identification information displayed on a second display unit and a face of a target person; acquiring a second captured image captured by a second image capture unit including the second display unit, the second captured image including first identification information displayed on the first display unit; performing identity verification of the target person, based on the first captured image and the second captured image; and outputting a result of the identity verification.

### Brief Description of Drawings

[FIG. 1] FIG. 1 is a block diagram illustrating a hardware configuration of a determination apparatus according to a first example embodiment.
[FIG. 2] FIG. 2 is a block diagram illustrating a functional configuration of the determination apparatus according to the first example embodiment.
[FIG. 3] FIG. 3 is a side view illustrating an image capture operation of capturing images to be acquired by the determination apparatus according to the first example embodiment.
[FIG. 4] FIG. 4 is a plan view illustrating an example of a first captured image acquired by the determination apparatus according to the first example embodiment.
[FIG. 5] FIG. 5 is a plan view illustrating an example of a second captured image acquired by the determination apparatus according to the first example embodiment.
[FIG. 6] FIG. 6 is a flowchart illustrating a flow of operation of the determination apparatus according to the first example embodiment.
[FIG. 7] FIG. 7 is a block diagram illustrating a functional configuration of a determination apparatus according to a second example embodiment.
[FIG. 8] FIG. 8 is a block diagram illustrating a functional configuration of a determination apparatus according to a third example embodiment.
[FIG. 9] FIG. 9 is a plan view illustrating an example of frames displayed on the determination apparatus according to the third example embodiment.
[FIG. 10] FIG. 10 is a block diagram illustrating a functional configuration of a determination apparatus according to a fourth example embodiment.
[FIG. 11] FIG. 11 is a flowchart illustrating a flow of operation of the determination apparatus according to the fourth example embodiment.
[FIG. 12] FIG. 12 is a plan view illustrating an example of first identification information and second identification information in a determination apparatus according to a fifth example embodiment.

### Description of Example Embodiments

Hereinafter, a determination apparatus, a determination method, and a recording medium according to example embodiments will be described with reference to the drawings.

### <First Example Embodiment>

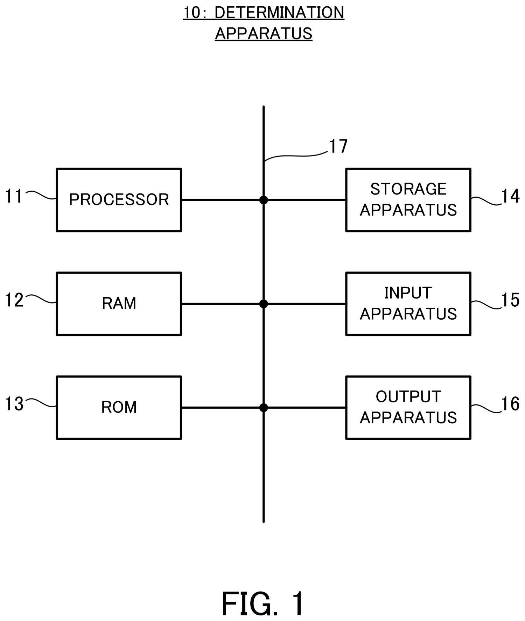

A determination apparatus according to a first example embodiment will be described with reference to FIG. 1 to FIG. 6.

### (Hardware Configuration)

First, a hardware configuration of the determination apparatus according to the first example embodiment will be described with reference to FIG. 1. FIG. 1 is a block diagram illustrating the hardware configuration of the determination apparatus according to the first example embodiment.

A s illustrated in FIG. 1, a determination apparatus 10 according to the first example embodiment includes a processor 11, a RAM (Random Access Memory) 12, and a ROM (Read Only Memory) 13. The determination apparatus 10 may further include a storage apparatus 14, an input apparatus 15, and an output apparatus 16. The processor 11, the RAM 12, the ROM 13, the storage apparatus 14, the input apparatus 15, and the output apparatus 16 are connected via a data bus 17.

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., may read) a computer program from a not-illustrated apparatus disposed outside the determination apparatus 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for performing identity verification of a target person is realized in the processor 11. That is, the processor 11 may function as a controller for performing each control in the determination apparatus 10.

The processor 11 may be configured as, for example, a CPU (central processing unit), a GPU (graphics processing unit), a FPGA (field-programmable gate array), a DSP (Digital Signal Processor), an ASIC (Application Specific Integrated Circuit), and a quantum processor. The processor 11 may be one of them, or may use a plurality of them in parallel.

The RAM 12 temporarily stores the computer program to be executed by the processor 11. The RAM 12 temporarily stores data that are temporarily used by the processor 11 when the processor 11 executes the computer program. The RAM 12 may be, for example, a D-RAM (Dynamic Random Access Memory) or a SRAM (Static Random Access Memory). Furthermore, another type of volatile memory may be used in place of the RAM 12.

The ROM 13 stores the computer program to be executed by the processor 11. The ROM 13 may also store fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the determination apparatus 10 for a long time. The storage apparatus 14 may operate as a temporary/transitory storage apparatus of the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the determination apparatus 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example.

The output apparatus 16 is an apparatus that outputs information about the determination apparatus 10 to the outside. For example, the output apparatus 16 may be a display apparatus (e.g., a display) that is configured to display the information about the determination apparatus 10. The output apparatus 16 may also be a speaker or the like that is configured to audio-output the information about the determination apparatus 10.

A part of the hardware described in FIG. 1 may be provided in an external apparatus of the determination apparatus 10. For example, the determination apparatus 10 may include only the processor 11, the RAM 12, and the ROM 13 described above. The other components (i.e., the storage apparatus 14, the input apparatus 15, and the output apparatus 16) may be provided in an external apparatus connected to the determination apparatus 10. In addition, in the determination apparatus 10, a part of an arithmetic function may be realized by an external apparatus (e.g., an external server or cloud, etc.).

### (Functional Configuration)

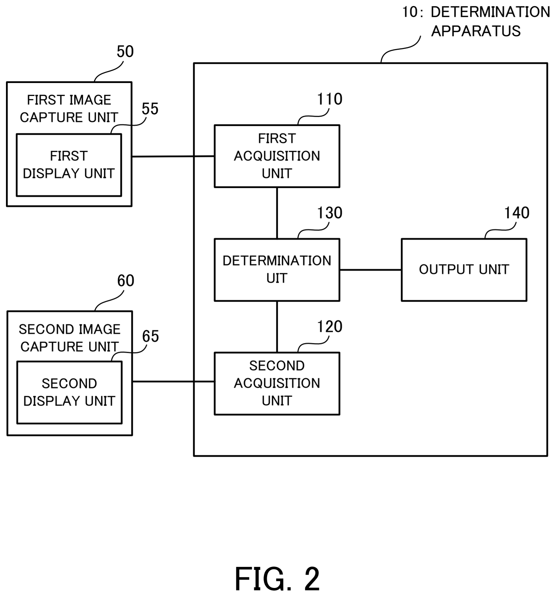

Next, a functional configuration of the determination apparatus 10 according to the first example embodiment will be described with reference to FIG. 2. FIG. 2 is a block diagram illustrating the functional configuration of the determination apparatus according to the first example embodiment.

As illustrated in FIG. 2, the determination apparatus 10 according to the first example embodiment includes, as components for realizing the functions thereof, a first acquisition unit 110, a second acquisition unit 120, a determination unit 130, and an output unit 140. Each of the first acquisition unit 110, the second acquisition unit 120, the determination unit 130, and the output unit 140 may be a processing block realized by the processor 11 (see FIG. 1), for example.

The first acquisition unit 110 is configured to acquire a first captured image captured by a first image capture unit 50. The first image capture unit 50 is, for example, a terminal (e.g., a personal computer) used by a target person, and includes a first display unit 55. The first image capture unit 50 is configured to capture the first captured image, which includes: second identification information displayed on a second display unit 65 of a second image capture unit 60; and a face of the target person. The second identification information is information for proving that the first captured image is an image normally captured by the first image capture unit 50, and may be, for example, a one-time passcode. The first image capture unit 50 is configured to capture the first captured image, for example, by using a camera built in the terminal. Alternatively, the first image capture unit 50 may be configured to capture the first captured image, by using a camera (e.g., a web camera, etc.) attached to the terminal. The first acquisition unit 110 is configured to output the acquired first captured image to the determination unit 130.

The second acquisition unit 120 is configured to acquire a second captured image captured by the second capture unit 60. The second capture unit 60 is, for example, a terminal (e.g., a smartphone) used by the target person, and includes a second display unit 65. The second image capture unit 60 is configured to capture the second captured image, which includes first identification information displayed on the first display unit 55 of the first image capture unit 50. The first identification information is information for proving that the second captured image is an image an image normally captured by the second image capture unit 60, and may be, for example, a one-time passcode, as in the second identification information. The second image capture unit 60 is configured to capture the second image, for example, by using a camera built in the terminal. Alternatively, the second image capture unit 60 may be configured to capture the second image by using a camera (e.g., a web camera, etc.) attached to the terminal. The second acquisition unit 120 is configured to output the acquired second image to the determination unit 130.

The determination unit 130 performs identity verification of the target person, based on the first captured image acquired by the first acquisition unit 110 and the second captured image acquired by the second acquisition unit 120. Here, the "identity verification" refers to processing of determining whether or not the target person is a registered user himself registered in advance. In other words, the identity verification is processing of determining whether or not impersonation is performed. The identity verification may be processing of determining that the target person is not another person. The identity verification may also be processing of determining whether the target person is a living body (i.e., not an image, a photograph, or the like). The identification unit 130 performs the identity verification by using the second identification information and the face of the target person included in the first captured image, and by using the first identification information included in the second image. For example, the determination unit 130 may determine whether or not the face of the target person matches a face of the registered user. Additionally, the determination unit 130 may use the first identification information and the second identification information to determine whether or not the first captured image and the second captured image are currently being captured normally. As existing techniques/technologies may be adopted to a specific method for the identity verification as appropriate, a further detailed description of the method will be omitted here.

An example of a situation where the identity verification is performed, is an online exam. In this case, by performing the identity verification of an examinee, who is a target person, it is possible to determine whether a genuine examinee himself is actually taking the exam (in other words, whether someone else is taking the exam on behalf of the genuine examinee). Other examples of the situations in which the identity verification is performed, may be online training, web meetings/conferences, identification renewal, and the like, but the application of the present example embodiment is not limited to those examples.

The output unit 140 is configured to output a result of the identity verification by the verification unit 130. The output unit 140 may be configured to output the result of the identity verification, for example, by using the output apparatus 16 described above (see FIG. 1). For example, the output unit 140 may image-output the result of the identity verification on a display provided in the output apparatus 16. Alternatively, the output unit 140 may audio-output the result of the identity verification via a speaker provided in the output apparatus 16. The output unit 140 may also be configured to output the result of the identity verification to an external apparatus. For example, the output unit 140 may output the result of the identity verification to an external apparatus that operates in response to the result of the identity verification.

### (Image Capture Method)

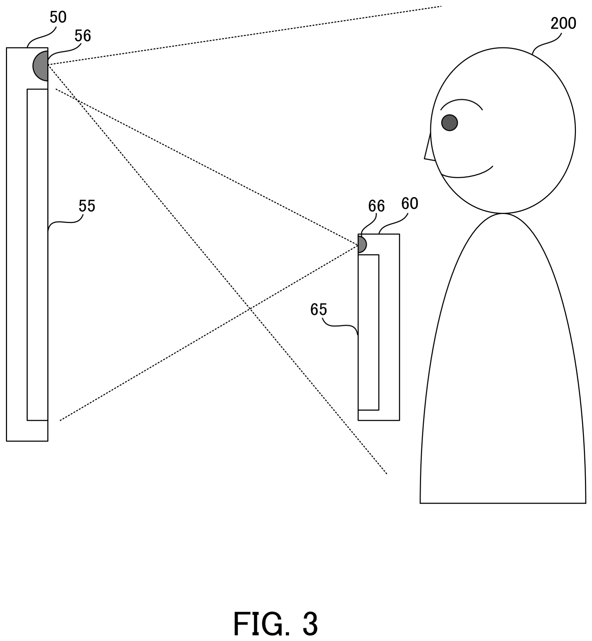

Next, with reference to FIG. 3, a method of capturing the first captured image and the second captured image to be acquired by the determination apparatus 10 according to the first example embodiment will be described. FIG. 3 is a side view illustrating an image capture operation of capturing images to be acquired by the determination apparatus according to the first example embodiment.

As illustrated in FIG. 3, the first captured image and the second captured image to be acquired by the determination apparatus 10 according to the first example embodiment are captured by the first image capture unit 50 and the second image capture unit 60 arranged facing each other.

The first image capture unit 50 is configured as a monitor of a personal computer including, for example, the first display unit 55 and a first camera 56. In this case, the first display unit 55 may be configured as a display part of the personal computer, and the first camera 56 may be configured as a camera built in the monitor. The first image capture unit 50 is disposed such that the second display unit 65 of the second image capture unit 60 and a face of a target person 200 are included in an image capture range of the first camera 56.

The second image capture unit 60 is configured as a smartphone including, for example, the second display unit 65 and a second camera 66. In this case, the second display unit 65 may be configured as a display part of the smartphone, and the second camera 56 may be configured as a camera (e.g., an in-camera) built in the smartphone. The second image capture unit 60 disposed such that the first display unit 55 of the first image capture unit 50 is included in an image capture range of the second camera 66.

### (Specific Example of Captured Images)

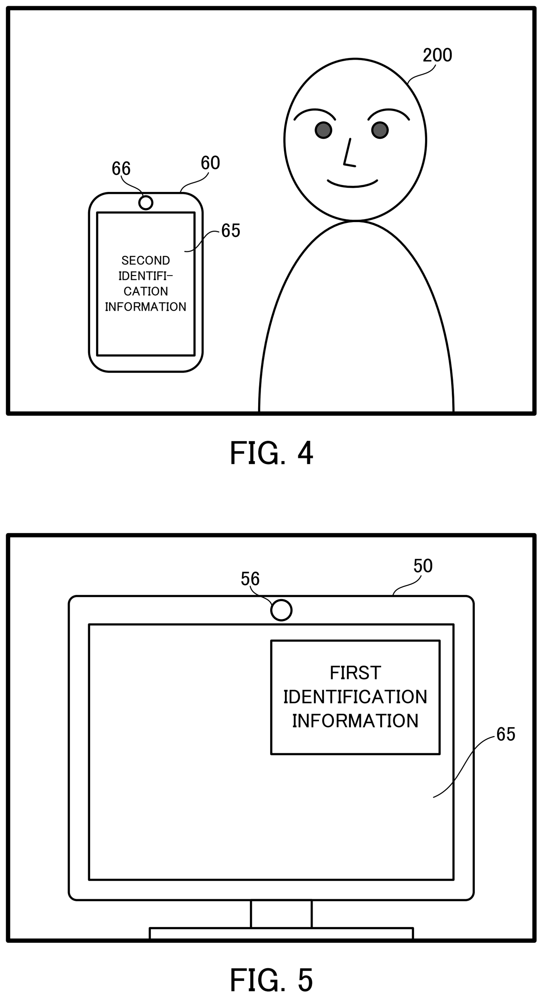

Next, with reference to FIG. 4 and FIG. 5, specific examples of the first captured image and the second captured image acquired by the determination apparatus 10 according to the first example embodiment will be described. FIG. 4 is a plan view illustrating an example of the first captured image acquired by the determination apparatus according to the first example embodiment. FIG. 5 is a plan view illustrating an example of the second captured image acquired by the determination apparatus according to the first example embodiment. Here, the first captured image and the second captured image are assumed to be captured in the situation described in FIG. 3.

As illustrated in FIG. 4, the first captured image is captured as an image including the second identification information displayed on the second display unit 65 and the face of the target person 200. Here, the first captured image includes the entire second capture unit 60 (e.g., a smartphone), but the first captured image may be an image including only a part of the second capture unit 60. For example, the first captured image may be an image including only a part of the second display unit 65 in which the second identification information is displayed.

As illustrated in FIG. 5, the second captured image is captured as an image including the first identification information displayed on the first display unit 55. Here, the first captured image includes the entire first capture unit 50 (e.g., a monitor of a personal computer), but the second captured image may be an image including only a part of the first capture unit 50. For example, the second captured image may be an image including only a part of the first display unit 55 in which the first identification information displayed is displayed.

### (Flow of Operation)

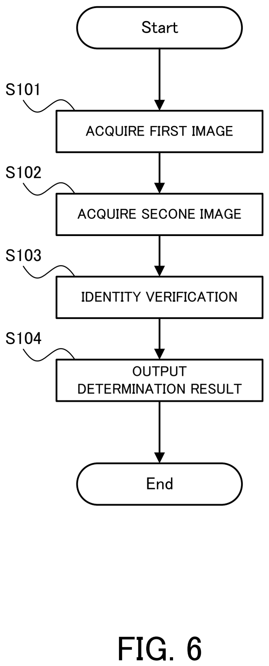

Next, with reference to FIG. 6, a flow of operation of the determination apparatus 10 according to the first example embodiment will be described. FIG. 6 is a flowchart illustrating the flow of the operation of the determination apparatus according to the first example embodiment.

As illustrated in FIG. 6, when the operation of the determination apparatus 10 according to the first example embodiment is started, first, the first acquisition unit 110 acquires the first captured image captured by the first image capture unit 50 (step S101). Furthermore, the second acquisition unit 120 acquires the second captured image captured by the second image capture unit 60 (step S102). The first acquisition unit 110 and the second acquisition unit 120 output the acquired first captured image and the acquired second captured image to the determination unit 130, respectively.

Then, the determination unit 130 performs the identity verification of the target person, based on the first captured image acquired by the first acquisition unit 110 and the second captured image acquired by the second acquisition unit 120 (step S103). Then, the output unit 140 outputs the result of the identity verification by the determination unit 130 (step S104).

The above series of operating steps may be repeated. That is, the identity verification using the first captured image and the second captured image may be repeated. An example of repeating the identity verification will be described in detail in another example embodiment later.

### (Technical Effect)

Next, a technical effect obtained by the determination apparatus 10 according to the first example embodiment will be described.

As described in FIG. 1 to FIG. 6, in the determination apparatus 10 according to the first example embodiment, the identity verification of the target person is performed by using the first captured image including the second identification information and the face of the target person, and by using the second captured image including the first identification information. In this way, it is possible to achieve highly reliable identity verification without increasing a burden on the target person or a cost required for the determination. For example, in operations such as remote monitoring by security personnel, there is a risk of increased costs and missed incidents. In operations where the target person is recorded and checked, not only is it impossible to check in real time, resulting in post-processing, but there is also a cost of checking a recorded video. In operations where the target person is required to enter a time-limited password periodically, the burden on the target person becomes heavy. However, according to the determination apparatus 10 in the present example embodiment, it is possible to appropriately determine whether or not the target person is a genuine person who claims to be, while resolving those technical problems.

### <Second Example Embodiment>

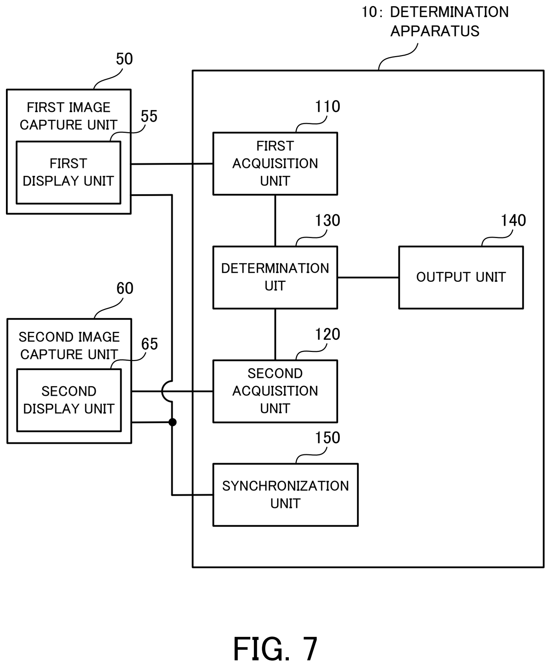

The determination apparatus 10 according to a second example embodiment will be described with reference to FIG. 7. The second example embodiment partially differs from the first example embodiment described above only its configuration and operation, and may be the same as the first example embodiment in the other parts. For this reason, a part differing from the already described first example embodiment will be described in detail below, and a description of the other overlapping parts will be omitted as appropriate.

### (Functional Configuration)

First, with reference to FIG. 7, a functional configuration of the determination apparatus 10 according to the second example embodiment will be described. FIG. 7 is a block diagram illustrating the functional configuration of the determination apparatus according to the second example embodiment. In FIG. 7, the same components as those illustrated in FIG. 2 carry the same reference numerals.

As illustrated in FIG. 7, the determination apparatus 10 according to the second example embodiment includes, as components for realizing the functions thereof, the first acquisition unit 110, the second acquisition unit 120, the determination unit 130, the output unit 140, and a synchronization unit 150. That is, the determination apparatus 10 according to the second example embodiment further includes the synchronization unit 150, in addition to the configuration in the first example embodiment (see FIG. 2). The synchronization unit 150 may be a processing block realized by the processor 11 (see FIG. 1), for example.

The synchronization unit 150 is configured to synchronize image capture timing of the first image capture unit 50 with image capture timing of the second image capture unit 60. For example, the synchronization unit 150 may perform synchronization such that the image capture timing of the first image capture unit 50 matches the image capture timing of the second image capture unit 60. Alternatively, the synchronization unit 150 may perform synchronization such that a difference between the image capture timing of the first image capture unit 50 and the image capture timing of the second image capture unit 60 is in a predetermined range.

The synchronization unit 150 may synchronize the image capture timing, for example, by synchronizing an internal counter of an application of the first image capture unit 50 with an internal counter of an application of the second image capture unit 60. In this case, the synchronization unit 150 may allow the images to be captured when the counter of the first image capture unit 50 and the counter of the second image capture unit 60 have the same count. The execution of the image capture operation by the target person 200 (e.g., an operation of pressing an image capture button) in one of the first image capture unit 50 and the second image capture unit 60 may cause the synchronization unit 150 to allow the images to be captured, for example. For example, the synchronization unit 150 may transmit a signal to the second image capture unit 60 to prepare for the image capture when the image capture button on the first image capture unit 50 is pressed on the count of six, and may allow the images to be captured in both the first image capture unit 50 and the second image capture unit 60 on the count of nine. Alternatively, the synchronization unit 150 may allow the images to be captured, due to the fact that all of the information to be included in the first captured image and the second captured image (i.e., the first identification information, the second identification information, and the face of the target person) is included in the image capture range of the first image capture unit 50 and the second image capture unit 60.

### (Technical Effect)

Next, a technical effect obtained by the determination apparatus 10 according to the second example embodiment will be described.

As described in FIG. 7, in the determination apparatus 10 according to the second example embodiment, the image capture timing of the first image is synchronized with the image capture timing of the second image. In this way, it is possible to prevent/control a difference in the image capture timing between the first image and the second image, thereby enabling the identity verification to be performed with higher accuracy.

### <Third Example Embodiment>

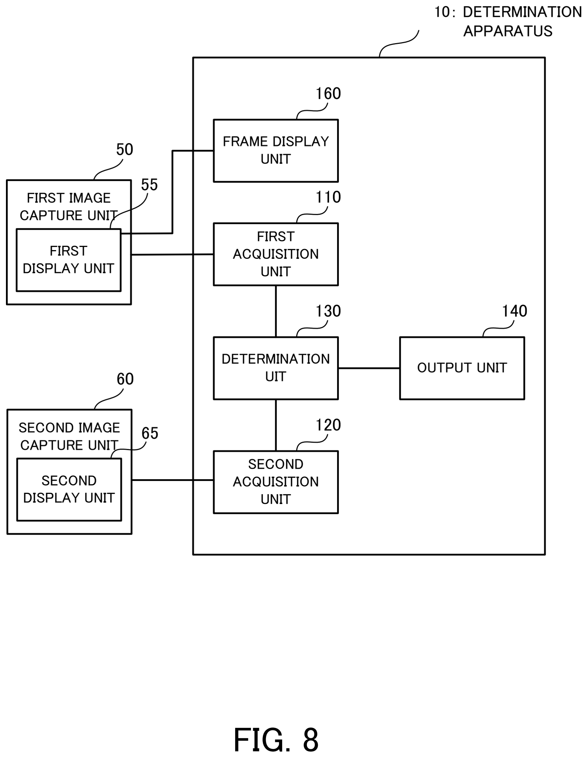

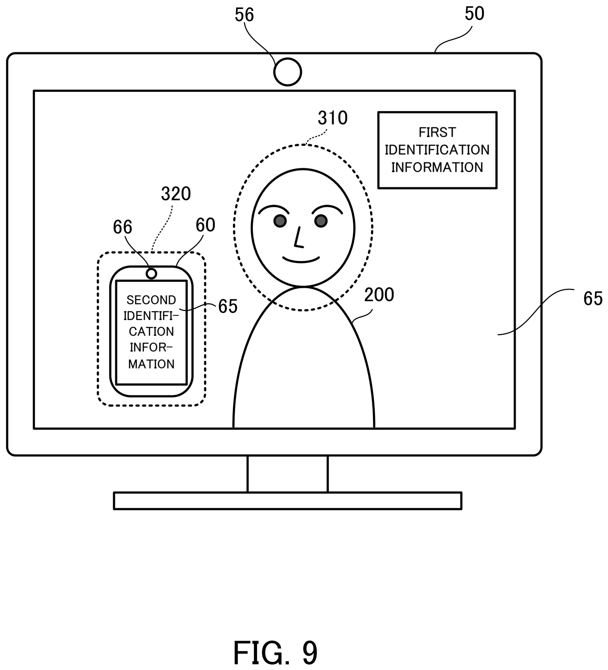

The determination apparatus 10 according to a third example embodiment will be described with reference to FIG. 8 and FIG. 9. The third example embodiment partially differs from the first and second example embodiments described above only its configuration and operation, and may be the same as the first and second example embodiments in the other parts. For this reason, a part differing from each of the example embodiments described above will be described in detail below, and a description of the other overlapping parts will be omitted as appropriate.

### (Functional Configuration)

First, with reference to FIG. 8, a functional configuration of the determination apparatus 10 according to the third example embodiment will be described. FIG. 8 is a block diagram illustrating the functional configuration of the determination apparatus according to the third example embodiment. In FIG. 8, the same components as those illustrated in FIG. 2 carry the same reference numerals.

As illustrated in FIG. 8, the determination apparatus 10 according to the third example embodiment includes, as components for realizing the functions thereof, the first acquisition unit 110, the second acquisition unit 120, the determination unit 130, the output unit 140, and a frame display unit 160. That is, the determination apparatus 10 according to the third example embodiment further includes the frame display unit 160, in addition to the configuration in the first example embodiment (see FIG. 2). The frame display unit 160 may be a processing block realized by the processor 11 (see FIG. 1), for example.

The frame display unit 160 is configured to display an image captured by the first image capture unit 50 (so-called a live view image) on the first display unit 55 of the first image capture unit 50. Furthermore, the frame display unit 160 is configured to display a first frame for enclosing the face of the target person 200 and a second frame for enclosing the second display unit 65, on the first display unit 55 of the first image capture unit 50. The frame display unit 160 may superimpose and display the first frame and the second frame, on the image captured by the first image capture unit 50. The first frame is a frame displayed to capture the face of the target person 200 at an appropriate position and size. The second frame is a frame displayed to capture the second display unit 65 (i.e., the second identification information) at an appropriate position and size. The sizes and the display positions of the first frame and the second frame may be set in advance, or may be changed as appropriate depending on an environment in the image capture (e.g., lighting conditions) or the like.

### (Display Example)

Next, with reference to FIG. 9, a specific example of frame display in the determination apparatus 10 according to the third example embodiment will be described. FIG. 9 is a plan view illustrating an example of frames displayed on the determination apparatus according to the third example embodiment.

As illustrated in FIG. 9, in the determination apparatus 10 according to the third example embodiment, the image captured by the first image capture unit 50 (i.e., the image including the face of the target person 200 and the second display unit 65) is displayed on the first display unit 55. Additionally, a first frame 310 for enclosing the face of the target person 200 and a second frame 320 for enclosing the second display unit 65 are displayed on the first display unit 55. Furthermore, the first identification information is displayed on the first display unit 55. Here, the positions, sizes, and shapes of the frames illustrated in the figure are merely examples. Each of the first frame 310 and the second frame 320 may be displayed in a prominent color. In such a case, the color of the first frame 310 and the color of the second frame 320 may be different. Additionally, the first frame 310 and the second frame 320 may be displayed to flash or to be animated.

The first display unit 55 may display information for enclosing the face of the target person 200 and the second display unit 65 in the respective frames, in addition to the first frame 310 and the second frame 320. For example, messages such as "Please place your face in the frame" and "Please place your smartphone in the frame" may be displayed. In addition, in a case where the face of the target person 200 and the second display unit 65 are not in the frames, guidance information prompting movement may be displayed. For example, messages such as "Please move a little to the right" and "Please bring your smartphone closer to the camera" may be displayed. These messages may be displayed with an arrow indicating a moving direction, for example. Alternatively, these messages may be audio-outputted.

When the face of target person 200 is appropriately enclosed in the first frame 310, the frame display unit 160 may change a display aspect of the first frame 310. That is, the frame display unit 160 may change the display aspect of the first frame 310 to indicate that the face of the target person is enclosed in the frame. For example, the frame display unit 160 may change the color of the first frame 310 when the face of the target person 200 is appropriately enclosed the first frame 310. Similarly, when the second display unit 65 is appropriately is enclosed the second frame 320, the frame display unit 160 may change a display aspect of the second frame 320. That is, the frame display unit 160 may change the display aspect of the second frame 320 to indicate that the second display unit 65 is enclosed in the frame. For example, the frame display unit 160 may change the color of the second frame 320 when the second display unit 65 is appropriately enclosed in the second frame 320.

### (Technical Effect)

Next, a technical effect obtained by the determination apparatus 10 according to the third example embodiment will be described.

As described in FIG. 8 and FIG. 9, in the determination apparatus 10 according to the third example embodiment, the frames for enclosing the face of the target person 200 and the second display unit 65 are displayed on the first display unit 55. In this way, it is easy to position the face of the target person 200 and the second display unit 65, thereby enabling the first captured image including the face of the target person 200 and the second identification information, to be appropriately captured.

### <Fourth Example Embodiment>

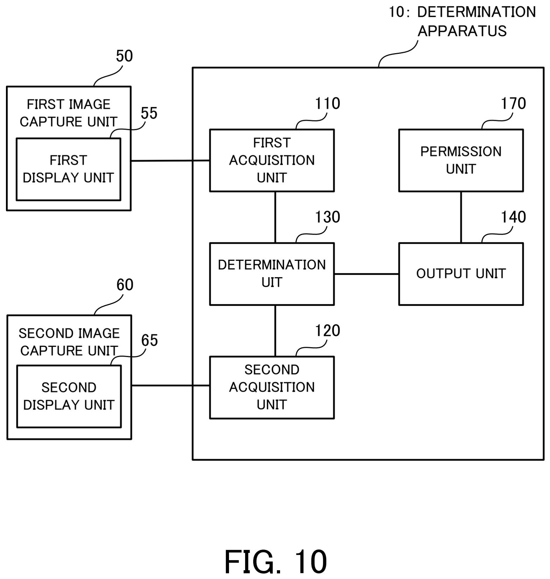

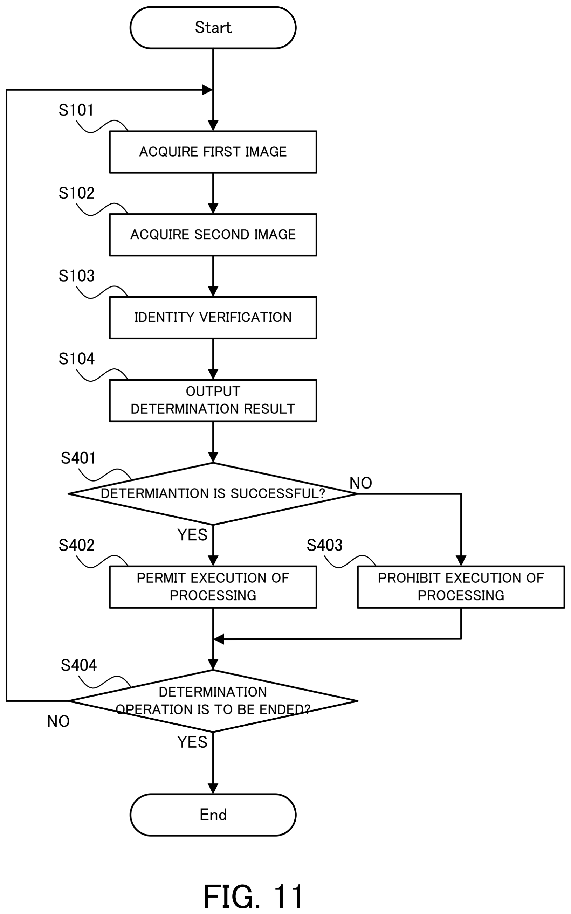

The determination apparatus 10 according to a fourth example embodiment will be described with reference to FIG. 10 and FIG. 11. The fourth example embodiment partially differs from the first to third example embodiments described above only in its operation, and may be the same as the first to third example embodiments in the other parts. For this reason, a part differing from each of the example embodiments described above will be described in detail below, and a description of the other overlapping parts will be omitted as appropriate.

### (Functional Configuration)

First, with reference to FIG. 10, a functional configuration of the determination apparatus 10 according to the fourth example embodiment will be described. FIG. 10 is a block diagram illustrating the functional configuration of the determination apparatus according to the fourth example embodiment. In FIG. 10, the same components as those illustrated in FIG. 2 carry the same reference numerals.

As illustrated in FIG. 10, the determination apparatus 10 according to the fourth example embodiment includes, as components for realizing the functions thereof, the first acquisition unit 110, the second acquisition unit 120, the determination unit 130, the output unit 140, and a permission unit 170. That is, the determination apparatus 10 according to the fourth example embodiment further includes the permission unit 170, in addition to the configuration in the first example embodiment (see FIG. 2). The permission unit 170 may be a processing block realized by the processor 11 (see FIG. 1), for example.

The first acquisition unit 110 and the second acquisition unit 120 according to the fourth example embodiment are configured to repeatedly acquire the first captured image and the second captured image, respectively. In other words, the first image capture unit 50 and the second image capture unit 60 are configured to repeatedly capture the first captured image and the second captured image, respectively. The determination unit 130 according to the fourth example embodiment is configured to perform the identity verification at each time when the first captured image and the second captured image are acquired. The output unit 140 is configured to output a determination result from the determination unit 130 to the permission unit 170.

The permission unit 170 is configured to permit the target person 200 to perform predetermined processing in a period when a result indicating a success in the identity verification by the determination unit 130 is outputted. Here, the "predetermined processing" refers to processing permitted to a genuine person, and processing to be prohibited to the others. The predetermined processing may be processing that may be performed on the terminal that is the first image capture unit 50, or the terminal that is the second image capture unit 60. An example of the predetermined processing is processing of accessing examination content in a web exam. In the web exam, for example, in order to prevent proxy test taking, only a genuine examinee himself should be permitted to access the examination content, and the others who are not the genuine examinee should not be permitted to access the examination content. The permission unit 170 is configured to permit such processing execution in response to the result of the identity verification.

### (Flow of Operation)

Next, with reference to FIG. 11, a flow of operation of the determination apparatus 10 according to the fourth example embodiment will be described. FIG. 11 is a flowchart illustrating the flow of the operation of the determination apparatus according to the fourth example embodiment. In FIG. 11, the same steps as those illustrated in FIG. 6 carry the same reference numerals.

As illustrated in FIG. 11, when the operation of the determination apparatus 10 according to the fourth example embodiment is started, first, the first acquisition unit 110 acquires the first captured image captured by the first image capture unit 50 (step S101). Furthermore, the second acquisition unit 120 acquires the second captured image captured by the second image capture unit 60 (step S102). The first acquisition unit 110 and the second acquisition unit 120 output the acquired first captured image and the acquired second captured image to the determination unit 130, respectively.

Then, the determination unit 130 performs the identity verification of the target person, based on the first captured image acquired by the first acquisition unit 110 and the second captured image acquired by the second acquisition unit 120 (step S103). Then, the output unit 140 outputs the result of the identity verification by the determination unit 130 (step S104).

Then, the permission unit 170 determines whether or not the identity verification by the verification unit 130 is successful (i.e., whether the target person is determined to be a genuine person) (step S401). When the identity verification is successful (the step S401: YES), the permission unit 170 permits the target person 200 to perform the predetermined processing (step S402). On the other hand, when the identity verification is not successful (the step S401: NO), the permission unit 170 prohibits the target person 200 from performing the predetermined processing (step S403). In this case, the permission unit 170 may output an alert.

Thereafter, the determination apparatus 10 determines whether or not to end the determination operation (step S404). Whether or not to end the determination operation may be determined, for example, based on whether or not a predetermined period elapses from the start of the operation. More specifically, for example, the determination operation may be determined to be ended at an end time of a web exam or a web-based course. When the determination operation is to be ended (the step S404: YES), a series of operating steps is ended. On the other hand, when the determination operation is not to be ended (the step S404: NO), the processing is restarted from the step S101. By repeating such operations, the determination apparatus 10 is enabled to permit the execution of the predetermined processing in a period in which the identity verification is successful.

### (Technical Effect)

Next, a technical effect obtained by the determination apparatus 10 according to the fourth example embodiment will be described.

As described in FIG. 10 and FIG. 11, in the determination apparatus 10 according to the fourth example embodiment, the identity verification is repeated, and while the identity verification is successful, the execution of the predetermined processing is permitted. In this way, it is possible to appropriately manage the execution of the predetermined processing by the target person, by using the result of the identity verification.

### <Fifth Example Embodiment>

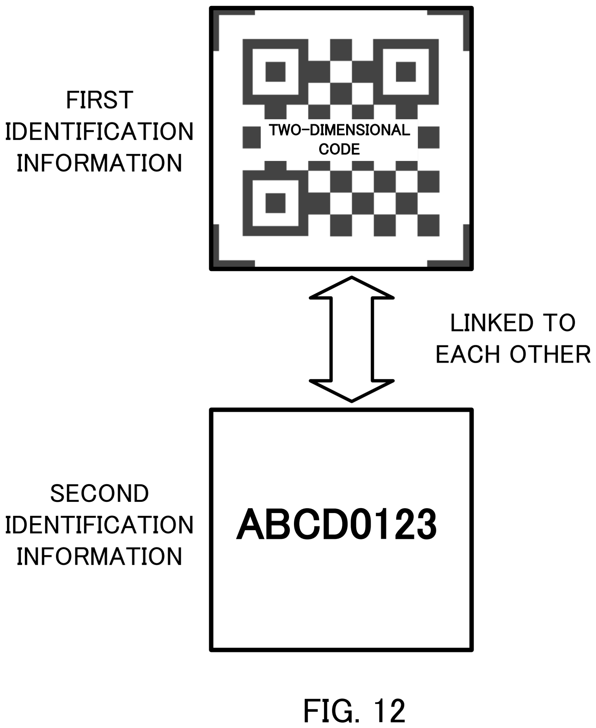

The determination apparatus 10 according to a fifth example embodiment will be described with reference to FIG. 12. The fifth example embodiment partially differs from the first to fourth example embodiments described above only its configuration and operation, and may be the same as the first to fourth example embodiments in the other parts. For this reason, a part differing from each of the example embodiments described above will be described in detail below, and a description of the other overlapping parts will be omitted as appropriate.

### (Identification Information)

First, with reference to FIG. 12, the first identification information and the second identification information in the determination apparatus 10 according to the fifth example embodiment will be described. FIG. 12 is a plan view illustrating an example of the first identification information and the second identification information in the determination apparatus according to the fifth example embodiment.

As illustrated in FIG. 12, in the determination apparatus 10 according to the fifth example embodiment, the first identification information and the second identification information have different display contents. For example, the first identification information may be information displayed as a two-dimensional code. The second identification information may be information displayed as a character string.

The first identification information and the second identification information have different display contents, but are linked to each other. Therefore, it is possible to perform the identity verification by collating/verifying the first identification information with the second identification information. The first identification information and the second identification information may be generated as information linked in advance. Alternatively, the first identification information may be converted by using a predetermined conversion rule, to be used as the second identification information. Conversely, the second identification information may be converted by using a predetermined conversion rule, to be used as the first identification information. In this case, when performing the identity verification using the first identification information and the second identification information, the verification unit 130 may perform processing of restoring the first or second identification information converted by using a predetermined conversion rule, to its original form by using a predetermined conversion rule.

### (Technical Effect)

Next, a technical effect obtained by the determination apparatus 10 according to the fifth example embodiment will be described.

As described in FIG. 12, in the determination apparatus 10 according to the fifth example embodiment, the first identification information and the second identification information are displayed as information having different display contents. In this way, it is possible to realize more reliable identity verification. For example, in a case where the first identification information and the second identification information have the same display content, there is a possibility that the identity verification can be fraudulently passed by copying and displaying one of the first and second identification information. However, as in the present example embodiment, by making the first identification information and the second identification information have different display contents, it is possible to prevent the aforementioned fraud by copying.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

A determination apparatus according to Supplementary Note 1 is a determination apparatus including: a first acquisition unit that acquires a first captured image captured by a first image capture unit including a first display unit, the first captured image including second identification information displayed on a second display unit and a face of a target person; a second acquisition unit that acquires a second captured image captured by a second image capture unit including the second display unit, the second captured image including first identification information displayed on the first display unit; a determination unit that performs identity verification of the target person, based on the first captured image and the second captured image; and an output unit that outputs a result of the identity verification.

### (Supplementary Note 2)

A determination apparatus according to Supplementary Note 2 is the determination apparatus according to Supplementary Note 1, further including: a synchronization unit that synchronizes image capture timing of the first image capture unit with image capture timing of the second image capture unit.

### (Supplementary Note 3)

A determination apparatus according to Supplementary Note 3 is the determination apparatus according to Supplementary Note 1 or 2, further including: a frame display unit that displays, on the first display unit, the image captured by the first image capture unit, a first frame enclosing the face of the target person, and a second frame enclosing the second display unit.

### (Supplementary Note 4)

A determination apparatus according to Supplementary Note 4 is the determination apparatus according to any one of Supplementary Notes 1 to 3, wherein the first acquisition unit and the second acquisition unit repeatedly acquire the first captured image and the second captured image, respectively, the determination unit performs the identity verification at each time when the first captured image and the second captured image are acquired, and the determination apparatus further includes a permission unit that permits the target person to perform predetermined processing in a period in which a result indicating a success in the identity verification is outputted by the output unit.

### (Supplementary Note 5)

A determination apparatus according to Supplementary Note 5 is the determination apparatus according to any one of Supplementary Notes 1 to 4, wherein the first identification information and the second identification information are information having different display contents that are linked to each other.

### (Supplementary Note 6)

A determination method according to Supplementary Note 6 is a determination method that is executed by at least one computer, the determination method including: acquiring a first captured image captured by a first image capture unit including a first display unit, the first captured image including second identification information displayed on a second display unit and a face of a target person; acquiring a second captured image captured by a second image capture unit including the second display unit, the second captured image including first identification information displayed on the first display unit; performing identity verification of the target person, based on the first captured image and the second captured image; and outputting a result of the identity verification.

### (Supplementary Note 7)

A recording medium according to Supplementary Note 7 is a recording medium on which a computer program that allows at least one computer to execute a determination method is recorded, the determination method including: acquiring a first captured image captured by a first image capture unit including a first display unit, the first captured image including second identification information displayed on a second display unit and a face of a target person; acquiring a second captured image captured by a second image capture unit including the second display unit, the second captured image including first identification information displayed on the first display unit; performing identity verification of the target person, based on the first captured image and the second captured image; and outputting a result of the identity verification.

### (Supplementary Note 8)

A computer program according to Supplementary Note 8 is a computer program that allows at least one computer to execute a determination method, the determination method including: acquiring a first captured image captured by a first image capture unit including a first display unit, the first captured image including second identification information displayed on a second display unit and a face of a target person; acquiring a second captured image captured by a second image capture unit including the second display unit, the second captured image including first identification information displayed on the first display unit; performing identity verification of the target person, based on the first captured image and the second captured image; and outputting a result of the identity verification.

The present disclosure is allowed to be changed, if desired, without departing from the essence or spirit of this disclosure which can be read from the claims and the entire specification. A determination apparatus, a determination method, and a recording medium with such changes are also intended to be within the technical scope of the present disclosure.

### Description of Reference Codes

10 Determination apparatus
11 Processor
50 First image capture unit
55 First display unit
56 First camera
60 Second image capture unit
65 Second display unit
66 Second camera
110 First acquisition unit
120 Second acquisition unit
130 Determination unit
140 Output unit
150 Synchronization unit
160 Frame display unit
170 Permission unit
200 Target person
310 First frame
320 Second frame

## Claims

1. A determination apparatus comprising:
a first acquisition unit that acquires a first captured image captured by a first image capture unit including a first display unit, the first captured image including second identification information displayed on a second display unit and a face of a target person;
a second acquisition unit that acquires a second captured image captured by a second image capture unit including the second display unit, the second captured image including first identification information displayed on the first display unit;
a determination unit that performs identity verification of the target person, based on the first captured image and the second captured image; and
an output unit that outputs a result of the identity verification.

2. The determination apparatus according to claim 1, further comprising:
a synchronization unit that synchronizes image capture timing of the first image capture unit with image capture timing of the second image capture unit.

3. The determination apparatus according to claim 1 or 2, further comprising:
a frame display unit that displays, on the first display unit, the image captured by the first image capture unit, a first frame enclosing the face of the target person, and a second frame enclosing the second display unit.

4. The determination apparatus according to claim 1 or 2, wherein
the first acquisition unit and the second acquisition unit repeatedly acquire the first captured image and the second captured image, respectively,
the determination unit performs the identity verification at each time when the first captured image and the second captured image are acquired, and
the determination apparatus further comprises a permission unit that permits the target person to perform predetermined processing in a period in which a result indicating a success in the identity verification is outputted by the output unit.

5. The determination apparatus according to claim 1 or 2, wherein
the first identification information and the second identification information are information having different display contents that are linked to each other.

6. A determination method that is executed by at least one computer, the determination method comprising:
acquiring a first captured image captured by a first image capture unit including a first display unit, the first captured image including second identification information displayed on a second display unit and a face of a target person;
acquiring a second captured image captured by a second image capture unit including the second display unit, the second captured image including first identification information displayed on the first display unit;
performing identity verification of the target person, based on the first captured image and the second captured image; and
outputting a result of the identity verification.

7. A recording medium on which a computer program that allows at least one computer to execute a determination method is recorded, the determination method including:
acquiring a first captured image captured by a first image capture unit including a first display unit, the first captured image including second identification information displayed on a second display unit and a face of a target person;
acquiring a second captured image captured by a second image capture unit including the second display unit, the second captured image including first identification information displayed on the first display unit;
performing identity verification of the target person, based on the first captured image and the second captured image; and
outputting a result of the identity verification.
